# EUROPÄISCHE PATENTSCHRIFT

(11) **EP 1 482 647 B1**
(45) Veröffentlichungstag und Bekanntmachung des Hinweises auf die Patenterteilung: **07.02.2007**
(21) Anmeldenummer: 04012309.3
(22) Anmeldetag: 25.05.2004
(51) Int. Cl.: H04B 1/59

(54) **Schaltungsanordnung zur Phasenmodulation für rückstreubasierte Transponder**
Circuit for phase modulation in a transponder based on back-scattering
Circuit pour la modulation de phase dans un transpondeur utilisant la rétro-diffusion

(30) Priorität: 28.05.2003 DE 10325399
(43) Veröffentlichungstag der Anmeldung: 01.12.2004
(73) Patentinhaber: ATMEL Germany GmbH, 74072 Heilbronn (DE)
(72) Erfinder: Fischer, Martin, Dipl.-Ing., 74629 Gleichen (DE); Friedrich, Ulrich, Dipl.-Ing., 74248 Ellhofen (DE)

(56) Entgegenhaltungen:
- DE-A- 10 158 442
- FR-A- 2 644 308

## Beschreibung

Die Erfindung bezieht sich auf eine Schaltungsanordnung zur Phasenmodulation für rückstreubasierte Transponder nach dem Oberbegriff des Anspruchs 1.

Systeme, bei denen zwischen einer oder mehreren Basisstationen bzw. Lesegeräten und einem oder mehreren sogenannten Transpondern draht- bzw. kontaktlos Daten übertragen werden, werden z.B. als kontaktlose Identifikationssysteme oder sogenannte Radio-Frequency-Identification(RFID)-Systeme eingesetzt. Auf dem Transponder können auch Sensoren, beispielsweise zur Temperaturmessung, integriert sein. Derartige Transponder werden auch als Remote-Sensoren bezeichnet. Die Transponder bzw. deren Sende- und Empfangseinrichtungen verfügen üblicherweise nicht über einen aktiven Sender für die Datenübertragung zur Basisstation. Bei derartigen nicht aktiven Systemen, die als passive Systeme bezeichnet werden, wenn sie keine eigene Energieversorgung aufweisen, und als semipassive Systeme bezeichnet werden, wenn sie eine eigene Energieversorgung aufweisen, wird zur Datenübertragung im Fernfeld der Basisstation in Verbindung mit UHF oder Mikrowellen in der Regel die sogenannte Backscatter- oder Rückstreukopplung eingesetzt. Hierzu werden von der Basisstation elektromagnetische Wellen emittiert, die durch die Sende- und Empfangseinrichtung des Transponders entsprechend den an die Basisstation zu übertragenden Daten mit einem Modulationsverfahren moduliert und reflektiert werden. Dies geschieht im allgemeinen durch eine Eingangsimpedanzänderung der Sende- und Empfangseinrichtung, die eine Veränderung der Reflexionseigenschaften einer daran angeschlossenen Antenne bewirkt. Hierfür sind unterschiedliche Verfahren bekannt.

Bei einem ersten Verfahrenstyp, der beispielsweise in der EP 1 211 635 A2 beschrieben ist, wird der Realteil der Eingangsimpedanz durch Zu- bzw. Abschalten einer im wesentlichen ohmschen Last verändert, wodurch hauptsächlich eine Amplitudenänderung oder Amplitudenmodulation der reflektierten Wellen bewirkt wird. Dieses Modulationsverfahren wird als Amplitudentastung (ASK) bezeichnet. Die ohmsche Last belastet als zusätzlicher Verbraucher die Spannungsversorgung des Transponders, wodurch die maximal überbrückbare Entfernung zwischen Transponder und Basisstation, insbesondere bei passiven Transpondern ohne eigene Energieversorgung, erheblich verringert wird.

Bei einem zweiten Verfahrenstyp wird der Imaginärteil der Eingangsimpedanz durch Veränderung der Kapazität eines Kondenstors im Eingangskreis der Sende- und Empfangseinrichtung beeinflusst, wodurch hauptsächlich eine Phasenänderung oder Phasenmodulation der reflektierten Wellen bewirkt wird. Dieses Modulationsverfahren wird als Phasenumtastung (PSK) bezeichnet. Im Vergleich zur ASK beeinflusst dieses Modulationsverfahren die Betriebsspannung praktisch nicht, wodurch ein hoher Wirkungsgrad des Transponders erzielbar ist und die maximal überbrückbare Entfernung zwischen Transponder und Basisstation zunimmt.

Eine zur Durchführung eines derartiges Verfahrens geeignete Vorrichtung ist beispielsweise in der älteren deutschen Patentanmeldung 10158442.3 der Anmelderin dargestellt. Hierbei wird die Kapazitätsänderung im Eingangskreis mit Hilfe eines steuerbaren Kondensators in Form eines Varaktors bewerkstelligt, der durch Varaktorsteuerungsmittel in Form einer steuerbaren Spannungsquelle mit einer Steuerspannung zur Veränderung seiner Kapazität beaufschlagt wird. Hierbei sind zwischen den einen Antennenanschluss und den einen Anschluss des Varaktors ein erster Kondensator und zwischen den anderen Antennenanschluss und den anderen Anschluss des Varaktor ein zweiter Kondensator eingeschleift.

In der FR 2 644 308 A1 ist eine Schaltungsanordnung zur Phasen modulation für rückstrenbasierte Transponder durch Eingangs impedanz änderung eines Eingang Kreises gezeigt, wobei der Eingangskreis einen Parallelschwingkreis aus einer Spule und einem Kondensator in Form eines Varaktors umfasst. In dem Eingangskreis ist ein erster Kondensator als Koppelkondensator zwischen einem Antennenanschluss und der Spule und ein zweiter Kondensator als Verbindungskondensator zwischen der Spule und dem Varaktor vorgesehen.

Der Erfindung liegt als technisches Problem die Bereitstellung einer Schaltungsanordnung zur Phasenmodulation für rückstreubasierte Transponder zugrunde, die eine einfache Ansteuerbarkeit des Varaktors gewährleistet und kostengünstig realisierbar ist.

Die Erfindung löst dieses Problem durch die Bereitstellung einer Schaltungsanordnung mit den Merkmalen des Anspruchs 1.

Erfindungsgemäß ist höchstens ein weiterer Kondensator entweder zwischen den einen Antennenanschluss und den Varaktor oder zwischen den anderen Antennenanschluss und den Varaktor in Serie eingeschleift. In anderen Worten ist entweder nur der Varaktor zwischen die Antennenanschlüsse eingeschleift oder es ist ein weiterer Kondensator höchstens zwischen den einen Antennenanschluss und den Varaktor oder zwischen den anderen Antennenanschluss und den Varaktor in Serie eingeschleift. Der Begriff "Kondensator" soll vorliegend der Einfachheit alle möglichen elektrischen Schaltungskomponenten mit einer kapazitiven Wirkung umfassen. Ein Kondensator kann hierbei selbstverständlich auch durch eine Parallel- bzw. Serienschaltung mehrerer Kondensatoren gebildet werden. In jedem Fall bleibt einer der beiden Anschlussseiten des Varaktors kondensatorfrei. Dies ermöglicht die Einsparung von Kondensatoren, wodurch Chipfläche eingespart wird und die Herstellungskosten reduziert werden können.

In einer Weiterbildung der Schaltungsanordnung nach Anspruch 2 liegt ein erster Antennenanschluss auf einer Bezugsspannung. Dies ermöglicht eine zuverlässige, niederohmige Ankopplung der Antenne an die Bezugsspannung.

In einer Weiterbildung der Schaltungsanordnung nach Anspruch 3 oder 4 ist zwischen einen Antennenanschluss und eine Transponder-Schaltungseinheit, insbesondere einen Gleichrichter und/oder eine Symbolrückgewinnungsschaltung, ein Entkopplungskondensator eingeschleift. Der Entkopplungskondensator dient der DC-Entkopplung der Transponder-Schaltungseinheit und kann Bestandteil dieser Schaltungseinheit sein.

In einer Weiterbildung der Schaltungsanordnung nach Anspruch 5 ist zwischen einen Antennenanschluss und ein Bezugspotential ein weiterer Entkopplungskondensator eingeschleift. Dieser Entkopplungskondensator dient zur DC-Entkopplung der Varaktor-Steuerspannung vom Bezugspotential.

Vorteilhafte Ausführungsformen der Erfindung sind in den Zeichnungen dargestellt und werden nachfolgend beschrieben. Hierbei zeigen:
- Fig. 1: ein schematisches Schaltbild einer Schaltungsanordnung zur Phasenmodulation für rückstreubasierte Transponder für geschlossene Antennen,
- Fig. 2: ein schematisches Schaltbild einer Schaltungsanordnung zur Phasenmodulation für rückstreubasierte Transponder für offene Antennen,
- Fig. 3: ein schematisches Schaltbild einer weiteren Schaltungsanordnung zur Phasenmodulation für rückstreubasierte Transponder für offene Antennen und
- Fig. 4: ein schematisches Schaltbild einer Schaltungsanordnung zur Phasenmodulation für rückstreubasierte Transponder für offene und geschlossene Antennen.

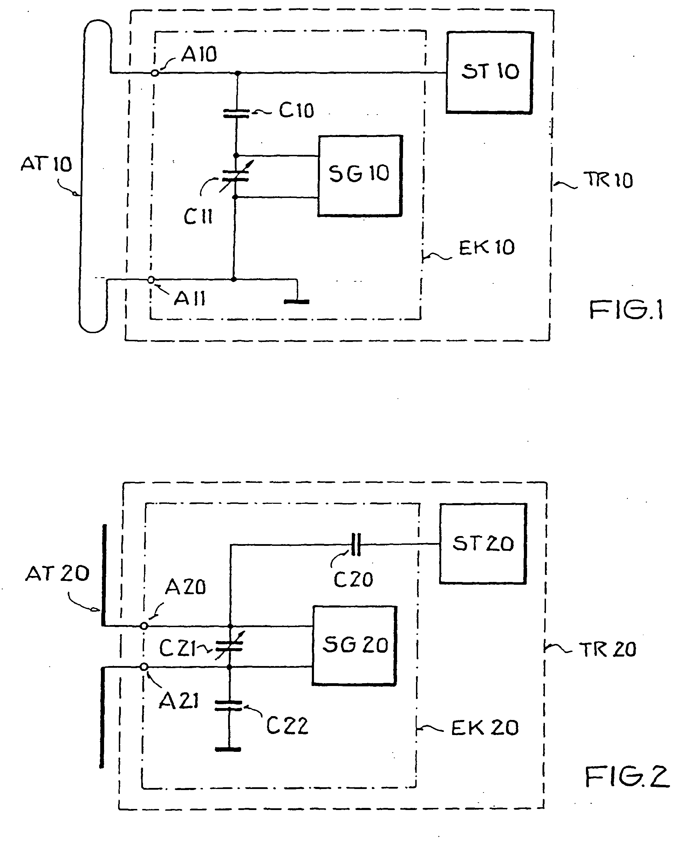

Fig. 1 zeigt ein schematisches Schaltbild einer Schaltungsanordnung zur Phasenmodulation mit einem Eingangskreis EK10 eines Transponders TR10, wobei der Eingangskreis EK10 Antennenanschlüsse A10 und A11 zum Anschluss einer geschlossenen Antenne AT10, einen Kondensator C10 und einen steuerbaren Kondensator in Form eines Varaktors C11, die in Serie zwischen die Antennenanschlüsse A10 und A11 eingeschleift sind, und einen Spannungsgenerator SG10 umfasst.

Der Spannungsgenerator SG10 beaufschlagt den Varaktor C11 mit einer Steuerspannung, die einer einzustellenden Kapazität bzw. einem einzustellenden Phasenwinkel des rückgestreuten Signals entspricht. Die Varaktorkennlinie, d.h. die Varaktorkapazität als Funktion der Varaktorspannung, kann hierbei im wesentlichen punktsymmetrisch zum Schnittpunkt der Kennlinie mit der Y-Achse sein. Zur Nutzung des vollen Kapazitätshubes des Varaktors C11 ist es folglich vorteilhaft, sowohl positive als auch negative Steuerspannungen anzulegen. In Abhängigkeit von der verwendeten Halbleiter-Technologie kann sich die Kennlinie in Richtung der X-Achse verschieben. In Abhängigkeit vom Grad der Verschiebung ist es möglich, beispielsweise Steuerspannungen mit nur einer Polarität anzulegen. Dies vereinfacht den Aufbau des Spannungsgenerators SG10, da dieser beispielsweise keine negativen Spannungen erzeugen muss.

Der Antennenanschluss A11 liegt auf der Masse-Bezugsspannung. Der Transponder TR10 umfasst weitere Schaltungsteile, die hier exemplarisch zu einem Schaltungsteil ST10 zusammengefasst sind. Der Schaltungsteil ST10 kann beispielsweise ein Gleichrichter und/oder eine Symbolrückgewinnungsschaltung sein. Zur DC-Entkopplung des Schaltungsteils ST10 von der durch den Spannungsgenerator SG10 erzeugten Steuerspannung ist lediglich der Kondensator C10 vorgesehen, der einerseits parallel zum Schaltungsteil ST10 an den Antennenanschluss A10 und andererseits an einen Anschluss des Varaktors C11 angeschlossen ist.

Fig. 2 zeigt ein schematisches Schaltbild einer Schaltungsanordnung für offene Antennen. Ein Eingangskreis EK20 eines Transponders TR20 umfasst einen ersten Entkopplungskondensator C20, der zwischen einen Antennenanschluss A20 und einen Schaltungsteil ST20 eingeschleift ist, einen Varaktor C21, der zwischen den Antennenanschluss A20 und einen Antennenanschluss A21 eingeschleift ist, einen zweiten Entkopplungskondensator C22, der zwischen den Antennenanschluss A21 und ein Bezugspotential eingeschleift ist, sowie einen Spannungsgenerator SG20, dessen Funktion derjenigen des in Fig. 1 beschriebenen Spannungsgenerators SG10 entspricht. Der Schaltungsteil ST20 entspricht dem Schaltungsteil ST10 von Fig. 1. Der Entkopplungskondensator C20 kann alternativ zum gezeigten Beispiel Bestandteil des Schaltungsteils ST20 sein. An die Antennenanschlüsse A20 und A21 kann eine offene Antenne AT20, die beispielsweise als Dipol ausgeführt sein kann, angeschlossen werden.

In Fig. 3 ist ein schematisches Schaltbild einer dritten erfindungsgemäßen Schaltungsanordnung gezeigt, bei der der zweite Entkopplungskondensator C22 von Fig. 2 durch eine direkte Verbindung eines entsprechenden Antennenanschlusses A21' mit dem Bezugspotential ersetzt ist. Die restlichen Schaltungsteile entsprechen denen von Fig. 2.

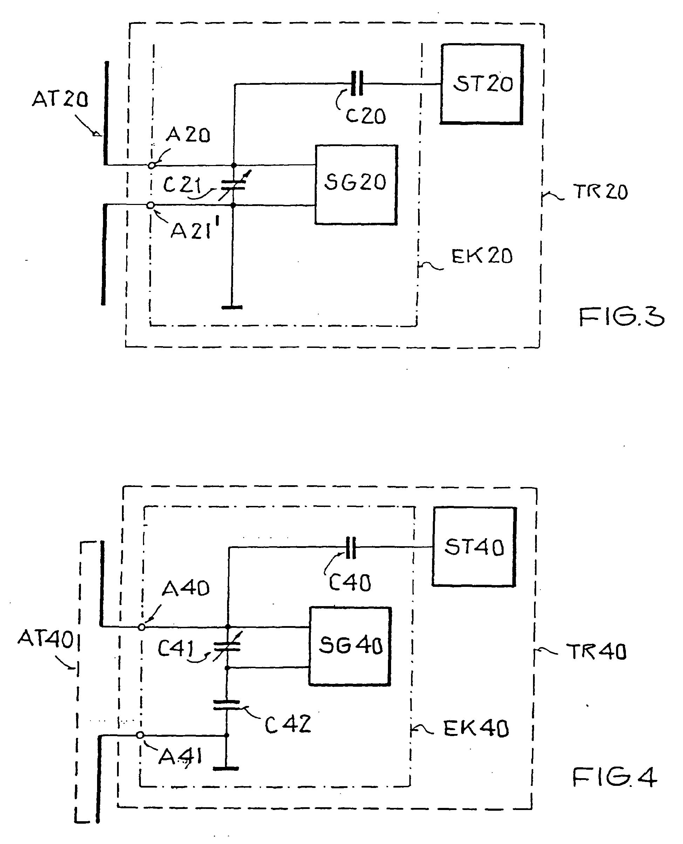

Fig. 4 zeigt ein schematisches Schaltbild einer Schaltungsanordnung für offene und geschlossene Antennen. Eine offene oder geschlossene Antenne AT40 ist an Antennenanschlüsse A40 und A41 eines Eingangskreises EK40 eines Transponders TR40 anschließbar. Zwischen die Antennenanschlüsse A40 und A41 ist ein Varaktor C41 und ein Kondensator C42 eingeschleift. Zur DC-Entkopplung der durch einen Spannungsgenerator SG40 erzeugten Steuerspannung ist zwischen den Antennenanschlüssen A40 und A41 lediglich der Kondensator C42 vorgesehen, der einerseits an den Antennenanschluss A41 und andererseits an einen Anschluss des Varaktors C41 angeschlossen ist. Die Funktion des Spannungsgenerators SG40 entspricht der Funktion des Spannungsgenerators SG10 von Fig. 1. Ein Schaltungsteil ST40 des Transponders TR40, dessen Funktion der des Schaltungsteils ST10 von Fig. 1 entspricht, ist mit dem Antennenanschluss A40 durch einen Entkopplungskondensator C40 verbunden, der alternativ zum gezeigten Beispiel Bestandteil des Schaltungsteils ST40 sein kann.

Den in Fig. 1 bis 4 gezeigten Ausführungsformen ist gemeinsam, dass neben dem steuerbaren Kondensator in Form eines Varaktors ein weiterer Kondensator höchstens zwischen den einen Antennenanschluss und den Varaktor oder zwischen den anderen Antennenanschluss und den Varaktor in Serie eingeschleift ist. Ermöglicht wird dies beispielsweise durch Einbeziehen anderer Systemkomponenten, insbesondere von bereits vorhandenen Entkopplungskondensatoren weiterer Schaltungsteile, und geeignete Wahl von Anschlusspunkten der Antennen. Weiterhin ist es möglich, nur einen Teil des Kapazitätshubes des Varaktors auszunutzen und somit den Aufbau des Spannungsgenerators zu vereinfachen. Dies Maßnahmen reduzieren die Anzahl der benötigten Bauelemente und führen folglich zu einer kostengünstigen Realisierbarkeit.

## Patentansprüche

1. Schaltungsanordnung zur Phasenmodulation für rückstreubasierte Transponder durch Eingangsimpedanzänderung eines Eingangskreises (EK10, EK20, EK40) des Transponders (TR10, TR20, TR40), mit
- zwei Antennenanschlüssen (A10, A11, A20, A21, A21', A40, A41) im Eingangskreis (EK10, EK20, EK40) zum Anschluss einer Antenne (AT10, AT20, AT40),
- einem Varaktor (C11, C21, C41) mit zwei Varaktor anschlüssen im Eingangskreis (EK10, EK20, EK40) und
- Varaktorsteuerungsmitteln (SG10, SG20, SG40), um den Varaktor (C11, C21, C41) mit einer Steuerspannung zur Veränderung seiner Kapazität zu beaufschlagen,
wobei
- höchstens ein weiterer Kondensator (C10, C42) entweder nur zwischen den einen Antennenanschluss (A10) und einen Anschluss des Varaktors (C11) oder nur zwischen den anderen Antennenanschluss (A41) und den anderen Anschluss des Varaktors (C41) in Serie eingeschleift ist.

2. Schaltungsanordnung nach Anspruch 1, wobei ein erster Antennenanschluss (A11, A21', A41) auf einer Bezugsspannung liegt.

3. Schaltungsanordnung nach Anspruch 1, wobei zwischen einen Antennenanschluss (A20, A40) und eine k Transponder-Schaltungseinheit (ST20, ST40), insbesondere einen Gleichrichter und/oder eine Symbolrückgewinnungsschaltung, ein Entkopplungskondensator (C20, C40) eingeschleift ist.

4. Schaltungsanordnung nach Anspruch 2, wobei zwischen einen Antennenanschluss (A20, A40) und eines Transponder-Schaltungseinheit (ST20, ST40), insbesondere einen Gleichrichter und/oder eine Symbolrückgewinnungsschaltung, ein Entkopplungskondensator (C20, C40) eingeschleift ist.

5. Schaltungsanordnung nach Anspruch 1 oder 3, wobei zwischen einen Antennenanschluss (A21) und ein Bezugspotential ein weiterer Entkopplungskondensator (C22) eingeschleift ist.

## Claims

1. Circuit arrangement for phase-modulation for backscatter-based transponders by input impedance change of an input circuit (EK10, EK20, EK40) of the transponder (TR10, TR20, TR40), with
- two antenna connections (A10, A11, A20, A21, A21', A40, A41) in the input circuit (EK10, EK20, EK40) for connection of an antenna (AT10, AT20, AT40),
- a varactor (C11, C21, C41) with two varactor terminals in the input circuit (EK10, EK20, EK40) and
- varactor control means (SG10, SG20, SG40) in order to act on the varactor (C11, C21, C41) by a control voltage for changing its capacitance,
wherein
- at most one further capacitor (C10, C42) is connected in series either only between the one antenna connection (A10) and a terminal of the varactor (C11) or only between the other antenna connection (A41) and the other terminal of the varactor (C41).

2. Circuit arrangement according to claim 1, wherein a first antenna connection (A11, A21', A41) lies at a reference voltage.

3. Circuit arrangement according to claim 1, wherein a decoupling capacitor (C20, C40) is connected between an antenna connection (A20, A40) and a transponder circuit (ST20, ST40), particularly a rectifier and/or a symbol recovery circuit.

4. Circuit arrangement according to claim 2, wherein a decoupling capacitor (C20, C40) is connected between an antenna connection (A20, A40) and a transponder circuit (ST20, ST40), particularly a rectifier and/or a symbol recovery circuit.

5. Circuit arrangement according to claim 1 or 3, wherein a further decoupling capacitor (C22) is connected between an antenna connection (A21) and a reference potential.

## Revendications

1. Circuit de modulation de phase pour un transpondeur basé sur la rétro-diffusion par une modification d'impédance d'entrée d'un circuit d'entrée (EK10, DK20, EK40) du transpondeur (TR10, TR20, TR40), comprenant :
- deux branchements d'antenne (A10, A11, A20, A21, A21', A40, A41) dans le circuit d'entrée (EK10, EK20, EK40) pour connecter une antenne (AT10, T20, AT40),
. un varactor (C11, C21, C41) présentant deux connexions de varactor dans le circuit d'entrée (EK10, EK20, EK40), et
. des moyens de commande du varactor (SG10, SG20, SG40) pour alimenter le varactor (C11, C21, C41) sous une tension de commande afin de modifier sa capacité,
circuit dans lequel
. tout au plus un condensateur supplémentaire (C10, C42) est inséré en série, soit seulement entre l'un des branchements d'antenne (A10) et une connexion du varactor (C11) soit seulement entre l'autre branchement d'antenne (A41) et l'autre connexion du varactor (C41).

2. Circuit selon la revendication 1, dans lequel un premier branchement d'antenne (A11, A21', A41) est porté à sa tension de référence.

3. Circuit selon la revendication 1, dans lequel un condensateur de découplage (C20, C40) est inséré entre un branchement d'antenne (A20, A40) et une unité de circuit de transpondeur (ST20, ST40), plus particulièrement un redresseur et/ou un circuit de récupération de symboles.

4. Circuit selon la revendication 2, dans lequel un condensateur de découplage (C20, C40) est inséré entre un branchement d'antenne (A20, A40) et une unité de circuit de transpondeur (ST20, ST40), plus particulièrement un redresseur et/ou un circuit de récupération de symboles.

5. Circuit selon la revendication 1 ou 3, dans lequel un condensateur de découplage supplémentaire (C22) est inséré entre un branchement d'antenne (A21) et un potentiel de référence.
